# FASCICULE DE BREVET EUROPEEN

(11) **EP 3 415 478 B1**
(45) Date de publication et mention de la délivrance du brevet: **15.04.2020**
(21) Numéro de dépôt: 18181149.8
(22) Date de dépôt: 26.06.2013
(51) Int. Cl.: C04B 18/24, C04B 28/02, C04B 28/10, C04B 28/12, C04B 103/46

(54) **NOUVEAU MATÉRIAU DE CONSTRUCTION COMPRENANT UN GRANULAT VÉGÉTAL**
NEUARTIGES BAUMATERIAL, DAS PFLANZLICHES GRANULAT ENTHÄLT
NEW BUILDING MATERIAL COMPRISING A PLANT BASED GRANULATE

(30) Priorité: 27.06.2012 FR 1256103
(43) Date de publication de la demande: 19.12.2018
(62) Demande divisionnaire de: 13744629.0
(73) Titulaire: Vicat, 92095 Paris La Défense (FR)
(72) Inventeur: BESSETTE, Laetitia, 38110 SAINT CLAIR DE LA TOUR (FR); PASQUIER, Michel, 69006 LYON (FR); SOMMAIN, Denis, 38300 CULIN (FR)
(74) Mandataire: Agasse, Stéphane

(56) Documents cités:
- EP-A1- 2 014 625
- EP-A1- 2 263 985
- AU-B2- 2001 272 205
- US-A1- 2007 186 822
- US-A1- 2010 136 269
- "Fabrication, caractéristiques chimiques, minéralogiques et physiques", Ciment & architecture - Portail du ciment naturel prompt, 1 juin 2011 (2011-06-01), pages 1-6, XP055058151, France Extrait de l'Internet: URL:http://www.cimentetarchitecture.com/fr /content/download/6376/48837/file/Fabricat ion, carcatéristiques chimiques, minéralogiques et physiques.doc.pdf [extrait le 2013-03-28]
- Anonymous: "LE PROMPT VICAT - Solutions Chanvre- Guide de mise en oeuvre B?tons et mortiers de chanvre", , 1 janvier 2011 (2011-01-01), pages 1-20, XP55345719, Extrait de l'Internet: URL:http://www.cimentetarchitecture.com/co ntent/download/6587/51718/file/Guide de mise en oeuvre b?ton de chanvre.pdf [extrait le 2017-02-14]

## Description

La présente invention a pour objet un nouveau matériau de construction contenant un granulat végétal ainsi qu'un kit utile pour la préparation de ce matériau de construction.

Le mortier et le béton sont des matériaux de construction composite fabriqué à partir de granulats agglomérés par un liant, généralement un ciment et/ou de la chaux. Les granulats les plus fréquemment utilisés sont des granulats minéraux, notamment le sable ou les gravillons, ou artificiels (granulats légers).

Depuis quelques années, pour répondre à des contraintes écologiques et énergétiques de plus en plus importantes, les professionnels du bâtiment ont tenté de mettre au point et d'utiliser de nouveaux matériaux de construction, notamment des bétons, à caractère isolant. Parmi ces nouveaux matériaux de construction, les bétons préparés à partir de granulat végétal, généralement du chanvre (communément désignés par « bétons de chanvre ») ont rencontré un succès grandissant. Ces bétons, préparés à partir de matériaux dits « biosourcés », présentent en effet un grand intérêt sur le plan environnemental tout en présentant l'avantage de posséder d'excellentes propriétés d'isolation thermique et acoustique. Le béton de chanvre est ainsi de plus en plus recommandé en écoconstruction.

Néanmoins, l'utilisation de granulat végétal dans un matériau de construction n'est pas sans conséquences sur les propriétés mécaniques et la durabilité de celui-ci.

En effet, contrairement aux granulats minéraux, le granulat végétal n'est pas inerte face au liant. Le végétal étant très hydrophile et pouvant absorber jusqu'à 4 fois son poids en eau, il est nécessaire, dans les bétons préparés à partir d'un granulat végétal, d'ajouter de grandes quantités d'eau. Ainsi le rapport eau/liant peut varier de 1 à 2 voire plus (selon le type de végétal) pour un béton préparé à partir d'un granulat végétal, alors qu'il est que d'environ 0,4 à 0,5 pour un béton préparé à partir d'un granulat minéral.

Ce fort excès d'eau dans le béton provoque des phénomènes perturbant l'interface liant/végétal.

Ainsi, l'excès d'eau induit un effet de dilution qui affecte la précipitation des hydrates dans le cas des liants hydrauliques, et retarde la prise.

De plus, un rapport eau/liant important entraîne une dilution du milieu alcalin et donc une macération du végétal utilisé comme granulat qui dégrade le végétal. Une partie de la cellulose, de l'hémicellulose, de la lignine et de la pectine constituant le végétal se dégradent ainsi en polysaccharides et polyphénols qui sont de forts retardateurs de prise. Cette dégradation du végétal réduit également la durée de vie du béton, c'est-à-dire la période durant laquelle les propriétés thermiques, acoustiques et mécaniques de celui-ci ne sont pas altérées.

Enfin, l'excès d'eau tend à rendre le béton finalement préparé plus sensible aux micro-organismes. Or, la présence excessive de microorganismes dans le béton finalement préparé, en particulier de microorganismes fongiques, augmente significativement le risque d'une dégradation de l'interface végétal/minéral entrainant une fragilisation dudit béton. La durabilité à long terme du béton de granulats végétaux et la qualité sanitaire du bâtiment s'en trouvent détériorées.

Tous ces phénomènes de dégradation du béton sont accentués par un allongement de sa durée de séchage (parfois plusieurs mois) due à la présence d'eau en excès.

Des problématiques similaires à celles évoquées ci-dessus sont associées à la préparation et à l'utilisation de tout matériau de construction, notamment les mortiers, contenant un granulat végétal.

Ainsi, la demande de brevet EP-A-2263985 relève que la difficulté pour ce type de matériau de construction réside dans la maîtrise des contraintes liées à l'utilisation de granulat végétal caractérisé par une capacité de rétention d'eau très élevée, mais qui de ce fait, procure des avantages potentiels intéressants en terme d'isolation thermique et phonique ainsi que du point de vue du poids du matériau. Pour palier à cette difficulté, il est proposé un matériau composite de construction composé d'un liant comprenant 45 à 70 % en masse de liant d'une chaux naturelle et 30 à 50 % en masse de liant de métakaolin, ledit liant étant associé à des granulats de chènevotte de chanvre présents à hauteur de 15 à 30 % en masse sèche de liant, avec un rapport eau/liant compris entre 0,5 et 1,5. Le faible rapport eau/liant est attribué à un procédé comprenant une succession d'étapes particulières qui empêchent l'absorption d'eau dans des quantités trop importantes par le granulat végétal, tout en permettant un mélange homogène de la phase liante avec le granulat végétal. Le document "LE PROMPT VICAT - Solutions Chanvre - Guide de mise en œuvre - Bétons et mortiers de chanvre", 1 Janvier 2011, décrit des formulations à base de ciment naturel prompt et des granulats de chanvre.

Le document AU 2001 272 205 B2 décrit un matériau de construction comprenant un liant hydraulique, des balles de riz et un éther de cellulose comme agent pour diminuer la sédimentation de la suspension.

A la date de la présente invention, il demeure nécessaire de proposer de nouveaux matériaux de construction pouvant être aisément préparés à partir de granulat végétal présentant à la fois un temps de prise, de durcissement et de séchage limitant l'apparition des phénomènes de dégradation dudit matériau, ainsi qu'une résistance aux jeunes âges et une durée de vie satisfaisante lors de son utilisation, sans pour autant nuire à ses propriétés d'isolation thermique et acoustique.

Or, il a maintenant été trouvé un matériau de construction pouvant être aisément préparé à partir de granulat naturel répondant à ces besoins.

Ainsi, la présente invention a pour objet un matériau de construction comprenant (p/p):
- de 10% à 60 % d'un liant hydraulique et/ou d'un liant aérien ;
- de 17% à 50% d'un granulat végétal choisi parmi le coton, la fibre de chanvre, la chènevotte, les anas de lin, les copeaux de bois, les billes de lièges, le miscanthus, le sisal et/ou la noix de coco ;
- de 0,05% à 5% d'un agent rétenteur d'eau ; et
- de 10% à 50% d'eau.

Le matériau de construction selon la présente invention est aisément préparé à partir d'un granulat végétal. Il présente d'excellentes propriétés d'isolation thermique et acoustique, mais également un temps de prise, de durcissement et de séchage limitant l'apparition des phénomènes de dégradation dudit matériau généralement observés avec les matériaux de construction préparés à partir d'un liant végétal. Le matériau de construction selon l'invention présente également une résistance aux jeunes âges et une durée de vie satisfaisante lors de son utilisation. En effet, contre toute attente, l'ajout d'un agent rétenteur d'eau dans la composition du matériau de construction permet de limiter l'absorption de l'eau par le granulat végétal tout en laissant celle-ci disponible pour réagir avec le liant. Ceci permet d'abaisser la quantité d'eau nécessaire à la préparation du matériau de construction et d'améliorer significativement tant le temps de prise, de durcissement et de séchage du matériau ainsi préparé, ainsi que sa résistance aux jeunes âges et sa durée de vie.

Dans le cadre la présente invention :
- on entend par « matériau de construction » un béton, un mortier ou un coulis, de préférence un béton ;
- on entend par « ciment naturel prompt » tout liant hydraulique à prise et durcissement rapide conforme à la norme NF P 15-314 : 1993 en vigueur à la date de la présente invention. Ce ciment résulte de la cuisson à des températures modérées (de 800 à 1200°C) d'un calcaire argileux de composition régulière, extrait de bancs homogènes, suivie d'un broyage très fin. La marne utilisée associe intimement argiles et calcaire. Aucun correcteur de composition n'est ajouté, ce qui justifie l'appellation de ciment naturel. La composition chimique du ciment prompt naturel est proche de celle des ciments Portland, mais sa composition minéralogique est différente. La cuisson à basse température produit, avec peu de phase fondue, de nombreux minéraux de très petites tailles dont certains, mal cristallisés, sont plus réactifs que dans un clinker de ciment artificiel La bélite (C₂S) y est majoritaire et constitue à elle seule près de la moitié du liant. L'alite (C₃S) n'est présente qu'en faible quantité. D'autres phases (périclase, sulfates alcalins, sulfates de calcium et calco-alcalins) sont également présentes en faibles quantités, mais jouent un rôle important lors de l'hydratation du liant. (Ciment Naturel, éditions Glénat, Cédric Avenier, Bruno Rosier et Denis Sommain, 2007) ;
- on entend par « agent rétenteur d'eau » tout polymère hydrosoluble permettant de modifier la rhéologie de l'eau par augmentation du seuil de cisaillement ou de la viscosité dynamique, limitant ainsi l'apparition de phénomène de ressuage ou de ségrégation ;
- on entend par « ressuage » la séparation du ciment et de l'eau dans la pâte constituant le matériau de construction;
- on entend par « ségrégation » la sédimentation gravitaire qui sépare les différents constituants d'un matériau de construction ;
- on entend par « accélérateur de durcissement » tout agent classiquement utilisé comme adjuvant dans les compositions de béton ou de mortier en vu d'accélérer la prise et/ou le durcissement du liant et d'augmenter les performances mécaniques du béton ou du mortier;
- on entend par « agent retardateur de prise » tout agent classiquement utilisé comme adjuvant dans les compositions de béton ou de mortier en vu de la précipitation des hydrates contenus dans le béton ou le mortier afin d'homogénéiser le mélange et de retarder la prise du béton ou du mortier frais.

De plus, dans le cadre de la présente invention, les proportions exprimées en % correspondent à des pourcentages massiques par rapport au poids total de l'entité considérée (par exemple le matériau de construction ou le liant).

Enfin, dans le cadre de la présente invention, les notations suivantes sont adoptées pour désigner les composants minéralogiques du ciment :
- C représente CaO ;
- A représente Al₂O₃ ;
- F représente Fe₂O₃ ;
- S représente SiO₂; et
- $ représente SO₃.

Ainsi, par exemple, la phase aluminoferrite calcique d'une composition correspondant à la formule générale C₄AF correspond en réalité à une phase (CaO)₄(Al₂O₃)(Fe₂O₃).

Dans le cadre de la présente invention, les teneurs en phases correspondent à des teneurs en phases mesurées par l'analyse de diffraction des rayons X associée à la méthode de calcul de Rietveld (A Profile Refinement Method for Nuclear and Magnetic Structures, H.M. Rietveld, J. Appl. Cryst. (1969) et Advances in quantitative XRD analysis for clinker, cements, and cementitious additions, G. Walenta and T. Füllmann, International Centre for Diffraction Data, 2004, Advances in X-ray Analysis, Volume 47).

L'analyse de diffraction des rayons X associée à la méthode de calcul de Rietveld permet de mesurer les teneurs en phases réellement présentes dans un clinker ou un ciment en prenant en compte les modifications et les changements de phases cristallines.

Le matériau de construction selon la présente invention comprend un liant qui peut être un liant hydraulique, un liant aérien, ou un mélange des deux.

Dans le cadre de la présente invention, on peut utiliser tout liant aérien classiquement utilisé pour préparer un mortier ou un béton. Parmi les liants aériens préférentiellement utilisés, on peut notamment citer la chaux aérienne (conforme à la norme NF EN 459-1 en vigueur à la date de la présente invention). Parmi les chaux aériennes préférentiellement utilisées dans le cadre de la présente invention, on peut citer :
- une chaux aérienne calcique (CL) contenant de l'oxyde de calcium (CaO) et/ou de l'hydroxyde de calcium (Ca(OH)₂) dont la somme CaO + MgO est d'au moins 70% et la teneur en MgO < 5% ;
- de la chaux dolomitique (DL) contenant de l'oxyde de calcium magnésium (CaO MgO) et/ou de l'hydroxyde de calcium magnésium (Ca(OH)₂ Mg(OH)₂) dont la somme CaO + MgO est d'au moins 80%, et la teneur en MgO varie de 5% à plus de 30%.

De même, dans le cadre de la présente invention, on peut utiliser tout liant hydraulique classiquement utilisé pour préparer un mortier ou béton. Parmi les liants hydrauliques préférentiellement utilisés, on peut notamment citer la chaux hydraulique (conforme à la norme NF EN 459-1 en vigueur à la date de la présente invention), un ciment Portland artificiel (conforme à la norme NF EN 197-1 en vigueur à la date de la présente invention) et un ciment naturel prompt.

De préférence, le ciment artificiel Portland comprend :
- de 20% à 95% d'un clinker contenant :
   - de 50% à 80% de C₃S ;
   - de 4% à 40% de C₂S ;
   - de 0% à 20% de C₄AF ; et
   - de 0% à 2% de C₃A ;
- de 0% à 4% de $ ;
- de 0% à 80% de laitier de haut fourneau, de fumée de silice, de pouzzolanes et/ou de cendres volantes.

De préférence, le ciment naturel prompt est constitué d'un clinker contenant
- de 0% à 35% de C₃S ;
- de 10% à 60% de C₂S ;
- de 1% à 12% de C₄AF ;
- de 1% à 10% de C₃A ;
- de 5% à 50% de CaCO₃ (calcite) ;
- de 10% à 15% de Ca₅(SiO₄)₂CO₃ (spurrite) ;
- de 3 à 10% de phases sulfates : yee'limite (C₄A₃$), Langbeinite (K₂Mg₂(SO₄)₃, anhydrite (C$) ; et
- de 10 à 20% de chaux, de périclase, de quartz et/ou d'une ou plusieurs phases amorphes.

De façon tout à fait préférée, on utilise un ciment naturel prompt comme liant hydraulique dans le cadre de la présente invention.

Il est évident que les matériaux de construction selon la présente invention peuvent contenir un unique liant tel que défini précédemment, ou un mélange de deux ou plus de ces liants.

Le matériau de construction selon la présente invention comprend de 10% à 60% d'un liant hydraulique et/ou d'un liant aérien tel que défini précédemment. De préférence, la présente invention a pour objet un matériau de construction tel que décrit précédemment comprenant de 15% à 45%, de préférence encore de 20% à 40% d'un liant tel que défini précédemment.

Le matériau de construction selon la présente invention comprend un granulat végétal choisi parmi :
- le coton,
- la fibre de chanvre, la chènevotte, les anas de lin, les copeaux de bois, les billes de lièges ou le miscanthus ;
- le sisal ; et
- la noix de coco.

De façon préférée, la présente invention a pour objet un matériau de construction tel que défini précédemment comprenant un granulat végétal choisi parmi la fibre de chanvre, la chènevotte, les anas de lin et les copeaux de bois.

Il est évident que les matériaux de construction selon la présente invention peuvent contenir un unique granulat végétal tel que défini précédemment, ou un mélange de deux ou plus de ces granulats végétaux.

Le matériau de construction selon la présente invention comprend de 17% à 50% d'un granulat végétal tel que défini précédemment. De préférence, la présente invention a pour objet un matériau de construction tel que décrit précédemment comprenant 17% à 40%, de préférence encore de 20% à 40% ou de 18% à 20% d'un granulat végétal tel que défini précédemment.

Le matériau de construction selon la présente invention comprend également un agent rétenteur d'eau. De préférence la présente invention a pour objet un matériau de construction tel que défini précédemment comprenant un agent rétenteur d'eau choisi comme étant :
- un polymère naturel choisi parmi :
   - les gommes végétales obtenues à partir d'exsudats d'arbres, de graines, de fruits ou d'algues telles que la gomme karaya, la gomme arabique, la gomme de guar ou l'amidon carraghénane ;
   - les polymères d'origine animale telles que les protéines animales ou obtenus par culture de micro-organismes, les hydrocolloïdes tels que la gomme xanthane, le dextrane, le gellane, la caséine ou la gélatine, l'alginate de calcium ou l'alginate de sodium,
   - les glycosaminoglycanes telles que l'acide hyaluronique ;
- un polymère naturel modifié choisi parmi les éthers de cellulose tels que le carboxyméthylcellulose (CMC), l'hydroxyéthylcellulsoe (HEC), l'hydroxypropylcellulose (HPC), la méthylcellulose et ses dérivés tels que la méthylhydroxylethylcellulose (MHEC), l'éthylcellulose (EC), l'éthylhydroxyéthycellulose (EHEC) et les acétates de cellulose (CA) ;
- un polymère synthétique choisi parmi :
   - le polyacrylamide (PAM) et ses copolymères ;
   - le poly(acide acrylique) (PAA) et ses homologues, notamment le poly(acide méthacrylique) (PMAA) ;
   - l'oxyde de polyéthylène (PEOX) ;
   - 1" alcool polyvinylique (PVAL) ;
   - le poly(N-vinylpyrrolidone) (PVP) ;
   - les polyélectrolytes notamment :
      ∘ les polycations tels que les polyacrylamides quaternaires, les polymines, le polyéthylène imine et les polyvinylpyridines ;
      ∘ les polyanions tels que le poly(acide acrylique) anionique, le poly(acide éthylène sulfonique, le polyacide styrène sulfonique (PSSA) ;
      ∘ et les polyampholytes tels que les copolymères d'acrylamide, d'acide (méth)acrylique, et de vinylpyridine.

De préférence encore, la présente invention a pour objet un matériau de construction tel que défini précédemment comprenant un agent rétenteur d'eau choisi parmi la gomme de guar, l'alginate de calcium, l'alginate de sodium, le carboxyméthylcellulose (CMC), la méthylhydroxylethylcellulose (MHEC), l'éthylhydroxyéthycellulose (EHEC) et le poly(acide acrylique) (PAA).

De façon tout à fait préférée, l'agent rétenteur d'eau défini précédemment possède une viscosité variant de 50.000 à 1.000.000 mPa.s à 1% en solution aqueuse et à 20°C.

Le matériau de construction selon la présente invention comprend de 0,05% à 5% d'un agent rétenteur d'eau tel que défini précédemment. De préférence, la présente invention a pour objet un matériau de construction tel que décrit précédemment comprenant de 0,05% à 3%, de préférence encore de 0,1% à 2% d'un agent rétenteur d'eau tel que défini précédemment.

Le matériau de construction selon la présente invention comprend également de 10% à 50% d'eau. De préférence, la présente invention a pour objet un matériau de construction tel que décrit précédemment comprenant de 15% à 45%, de préférence encore de 20% à 40% d'eau.

En plus des constituants précédents, le matériau de construction selon la présente invention peut également contenir, selon les besoins et l'usage envisagé, un ou plusieurs des constituants suivants :
- jusqu'à 4%, de préférence de 0,05% à 2% d'un accélérateur de durcissement tel que le carbonate de sodium l'hydrogénocarbonate de sodium, le carbonate de lithium et l'aluminate de sodium ; et/ou
- jusqu'à 1%, de préférence de 0,05% à 0,5% d'un agent retardateur tel que les ions citrates, notamment l'acide citrique, le citrate trisodique et le citrate potassique ; et les ions tartrates, notamment l'acide tartrique et le tartrate de potassium.

Le matériau de construction selon la présente invention peut être aisément préparé par tout procédé connu de l'homme de l'art.

Il peut notamment être préparé par introduction successive :
1/ du granulat végétal ;
2/ du liant et du rétenteur d'eau, optionnellement, du retardateur et/ou du durcisseur ;
3/ et de l'eau (de façon progressive).

Le matériau de construction peut être homogénéisé à l'aide d'un malaxeur électrique, d'un malaxeur planétaire ou d'une bétonnière.

Le matériau de construction peut ensuite être mis en place par tout procédé connu de l'homme de l'art, notamment par compaction, par projection, par pression ou par vibration.

Le matériau de construction selon la présente invention peut être utilisé pour la réalisation ou la rénovation d'un mur, d'une cloison, d'un dallage ou du toit d'un bâtiment.

Enfin, le matériau de construction selon la présente invention peut se présenter sous la forme d'une composition unique prête à l'emploi ou sous la forme d'un kit. Ainsi, la présente invention a également pour objet un kit utile pour la préparation d'un matériau de construction tel que défini précédemment, ledit kit comprenant :
- une composition contenant :
   - un liant hydraulique et/ou d'un liant aérien ;
   - et un agent rétenteur d'eau ;
- et un granulat végétal choisi parmi le coton, la fibre de chanvre, la chènevotte, les anas de lin, les copeaux de bois, les billes de lièges, le miscanthus, le sisal et/ou la noix de coco.

De préférence, la composition du kit selon la présente invention comprenant le liant hydraulique et l'agent rétenteur d'eau contiennent également :
- un accélérateur de durcissement tel que défini précédemment ;
- et/ou un agent retardateur tel que défini précédemment

La présente invention est illustrée de façon non limitative par les exemples suivants.

### Exemple 1 - Composition de béton selon l'invention

À l'aide d'un malaxeur planétaire, on prépare le mélange en ajoutant tout d'abord la chènevotte puis le liant, le carbonate de sodium, l'acide citrique et le rétenteur. Le tout est mélangé à sec puis l'eau est ajoutée.

Par la suite, on ajoute au coulis ainsi préparé la chènevotte et le reste d'eau et le mélange est ensuite malaxé pendant quelques minutes jusqu'à obtention d'un mélange homogène.

Un béton ayant la composition rapportée dans le tableau 1 suivant a été fabriqué selon ce procédé.

**Tableau 1 - Béton 1**

| **Constituants** | **% (w/w)** |
|---|---|
| Ciment Naturel Prompt (Vicat CNP PM - Ciment Naturel Prompt Prise Mer - conforme aux normes NF P 13-314 : 1993 et NF P 15-317 : 2006) | 30,8 |
| Chènevotte | 24,7 |
| MHEC | 0,9 |
| Acide citrique | 0,09 |
| Carbonate de sodium | 0 |
| Eau | 43,5 |

### Exemple 2 - Composition de béton selon l'invention

Un béton ayant la composition rapportée dans le tableau 2 suivant a été fabriqué selon le procédé décrit dans l'exemple 1.

**Tableau 2 - Béton 2**

| **Constituants** | **% (w/w)** |
|---|---|
| Ciment Naturel Prompt (Vicat CNP PM - Ciment Naturel Prompt Prise Mer - conforme aux normes NF P 13-314 : 1993 et NF P 15-317 : 2006) | 34,7 |
| Chènevotte | 27,8 |
| MHEC | 0,7 |
| Acide citrique | 0,10 |
| Carbonate de sodium | 0 |
| Eau | 36,7 |

### Exemple 3 - Composition de béton selon l'invention

Un béton ayant la composition rapportée dans le tableau 3 suivant a été fabriqué selon le procédé décrit dans l'exemple 1.

**Tableau 3 - Béton 3**

| **Constituants** | **% (w/w)** |
|---|---|
| Ciment Naturel Prompt (Vicat CNP PM - Ciment Naturel Prompt Prise Mer - conforme aux normes NF P 13-314 : 1993 et NF P 15-317 : 2006) | 19,0 |
| Chaux aérienne CL90 (conforme à la norme NF EN 459-1) | 8,0 |
| Chènevotte | 22,0 |
| MHEC | 1,0 |
| Acide citrique | 0,06 |
| Carbonate de sodium | 0,42 |
| Eau | 49,6 |

### Exemple 4 - Composition de béton selon l'invention

Un béton ayant la composition rapportée dans le tableau 4 suivant a été fabriqué selon le procédé décrit dans l'exemple 1.

**Tableau 4 - Béton 4**

| **Constituants** | **% (w/w)** |
|---|---|
| Ciment Naturel Prompt (Vicat CNP PM - Ciment Naturel Prompt Prise Mer - conforme aux normes NF P 13-314 : 1993 et NF P 15-317 : 2006) | 22,0 |
| Chaux aérienne CL90 (conforme à la norme NF EN 459-1) | 9,0 |
| Chènevotte | 25,0 |
| MHEC | 0,85 |
| Acide citrique | 0,07 |
| Carbonate de sodium | 0,5 |
| Eau | 42,6 |

### Exemple 5 - Composition de béton selon l'invention

Un béton ayant la composition rapportée dans le tableau 5 suivant a été fabriqué selon le procédé décrit dans l'exemple 1.

**Tableau 5 - Béton 5**

| **Constituants** | **% (w/w)** |
|---|---|
| Ciment Naturel Prompt (Vicat CNP PM - Ciment Naturel Prompt Prise Mer - conforme aux normes NF P 13-314 : 1993 et NF P 15-317 : 2006) | 30,8 |
| Chènevotte | 24,7 |
| MHEC | 0,43 |
| Acide citrique | 0,09 |
| Carbonate de sodium | 0,62 |
| Eau | 43,4 |

### Exemple 6 - Composition de béton selon l'invention

Un béton ayant la composition rapportée dans le tableau 6 suivant a été fabriqué selon le procédé décrit dans l'exemple 1.

**Tableau 6 - Béton 6**

| **Constituants** | **% (w/w)** |
|---|---|
| Ciment Naturel Prompt (Vicat CNP PM - Ciment Naturel Prompt Prise Mer - conforme aux normes NF P 13-314 : 1993 et NF P 15-317 : 2006) | 34,6 |
| Chènevotte | 27,7 |
| MHEC | 0,37 |
| Acide citrique | 0,10 |
| Carbonate de sodium | 0,69 |
| Eau | 36,6 |

### Exemple 7 - Composition de béton selon l'invention

Un béton ayant la composition rapportée dans le tableau 7 suivant a été fabriqué selon le procédé décrit dans l'exemple 1.

**Tableau 7 -Béton 7**

| **Constituants** | **% (w/w)** |
|---|---|
| Ciment Naturel Prompt (Vicat CNP PM - Ciment Naturel Prompt Prise Mer - conforme aux normes NF P 13-314 : 1993 et NF P 15-317 : 2006) | 39,4 |
| Chènevotte | 31,6 |
| MHEC | 0,42 |
| Acide citrique | 0,12 |
| Carbonate de sodium | 0,79 |
| Eau | 27,7 |

### Exemple 8 - Composition de béton selon l'invention

Un béton ayant la composition rapportée dans le tableau 8 suivant a été fabriqué selon le procédé décrit dans l'exemple 1.

**Tableau 8 - Béton 8**

| **Constituants** | **% (w/w)** |
|---|---|
| Ciment Naturel Prompt (Vicat CNP PM - Ciment Naturel Prompt Prise Mer - conforme aux normes NF P 13-314 : 1993 et NF P 15-317 : 2006) | 21,9 |
| Chaux aérienne CL90 (conforme à la norme NF EN 459-1) | 9,2 |
| Chènevotte | 25,3 |
| MHEC | 0,43 |
| Acide citrique | 0,07 |
| Carbonate de sodium | 0,44 |
| Eau | 42,8 |

### Exemple 9 - Bétons de chanvre « classiques »

Des bétons de chanvre « classiques » Ref.1 à Ref.5 ne contenant pas de rétenteur d'eau ont été fabriqués selon le procédé décrit dans l'exemple 1.

Leurs compositions sont rapportées dans le tableau 9 suivant.

**Tableau 9 - Ref. 1 à 5**

| | ***Ref.1*** | ***Ref.2*** | ***Ref.3*** | ***Ref.4*** | ***Ref.5*** |
|---|---|---|---|---|---|
| **Constituants** | **% (w/w)** | | | | |
| Ciment Naturel Prompt (Vicat CNP PM - Ciment Naturel Prompt Prise Mer - conforme aux normes NF P 13-314 : 1993 et NF P 15-317 : 2006) | 28,0 | 17,1 | 27,9 | 17,1 | 30,9 |
| Chaux aérienne CL90 (conforme à la norme NF EN 459-1) | 0,0 | 7,1 | 0,0 | 7,1 | 0 |
| Chènevotte | 22,5 | 19,7 | 22,4 | 19,7 | 24,8 |
| Acide citrique | 0,08 | 0,05 | 0,08 | 0,05 | 0,09 |
| Carbonate de sodium | 0,0 | 0,38 | 0,56 | 0,34 | 0,62 |
| Eau | 49,4 | 55,7 | 49,1 | 55,7 | 43,6 |

### Exemple 10 - Temps de séchage des bétons de l'invention

Les bétons 1 à 4 décrits précédemment ont été compactés dans des moules cylindriques de 16x32cm, puis décoffrés après une semaine de fabrication.

Le séchage des bétons 1 à 4 décrits précédemment à 20°C et sous 50% d'humidité relative a été suivi par pesée des éprouvettes en comparaison respectivement avec les bétons de chanvre « classiques » Ref.1 et Ref.2 ne contenant pas de rétenteur d'eau.

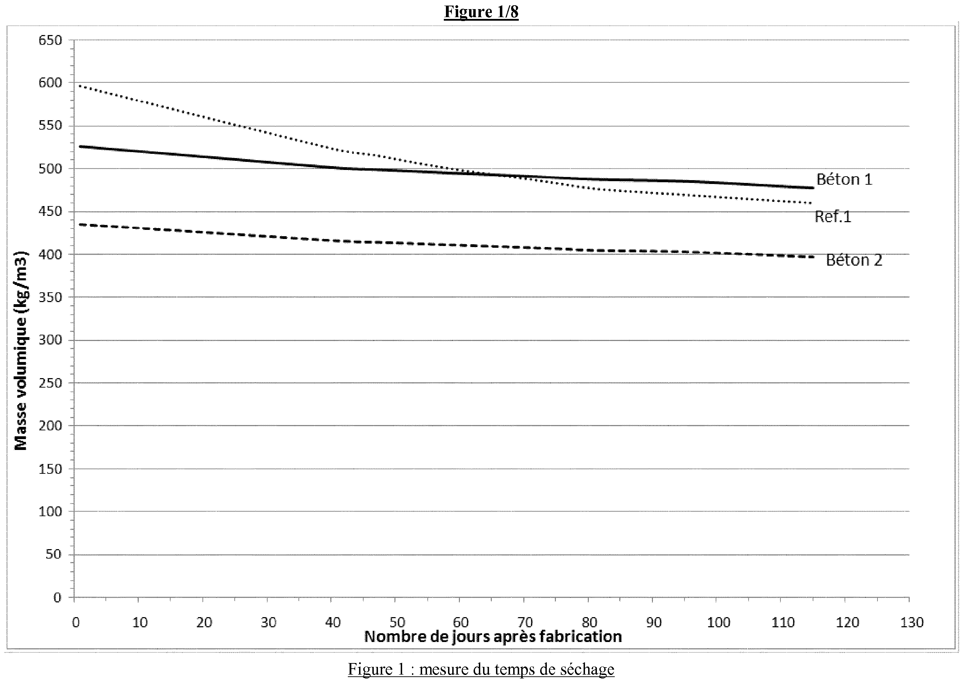

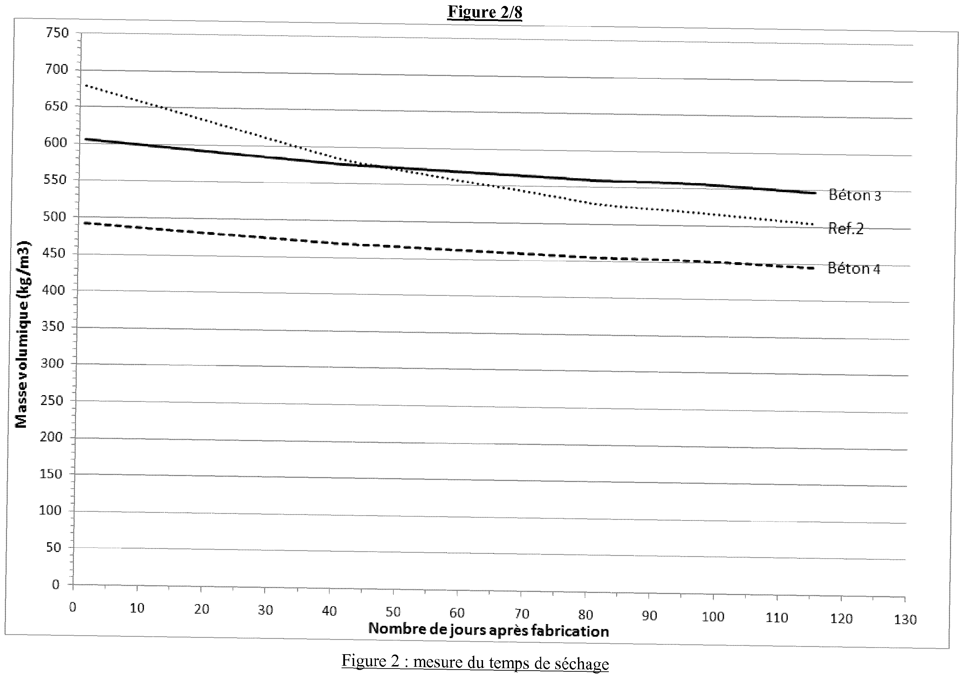

Les résultats sont rapportés en Figures 1 et 2.

Les figures 1 et 2 mettent en évidence que les bétons à base de granulat végétal contenant un rétenteur d'eau ont une masse volumique qui se stabilise plus rapidement (environ 30 à 40 jours) qu'un béton à base de granulats végétaux ne contenant pas de rétenteur d'eau (plus de 80 jours).

Les bétons de l'invention permettent donc de réduire significativement le temps de séchage.

### Exemple 11 - Temps de séchage des bétons de l'invention

Les bétons 5 à 7 décrits précédemment ont été compactés dans des moules cylindriques de 16x32cm, puis décoffrés après une semaine de fabrication.

Le séchage des bétons 5 à 7 décrits précédemment à 20°C et sous 50% d'humidité relative a été suivi par pesée des éprouvettes en comparaison respectivement avec les bétons de chanvre « classiques » Ref.3 et Ref.5 ne contenant pas de rétenteur d'eau et dont les compositions sont rapportées dans le tableau suivant.

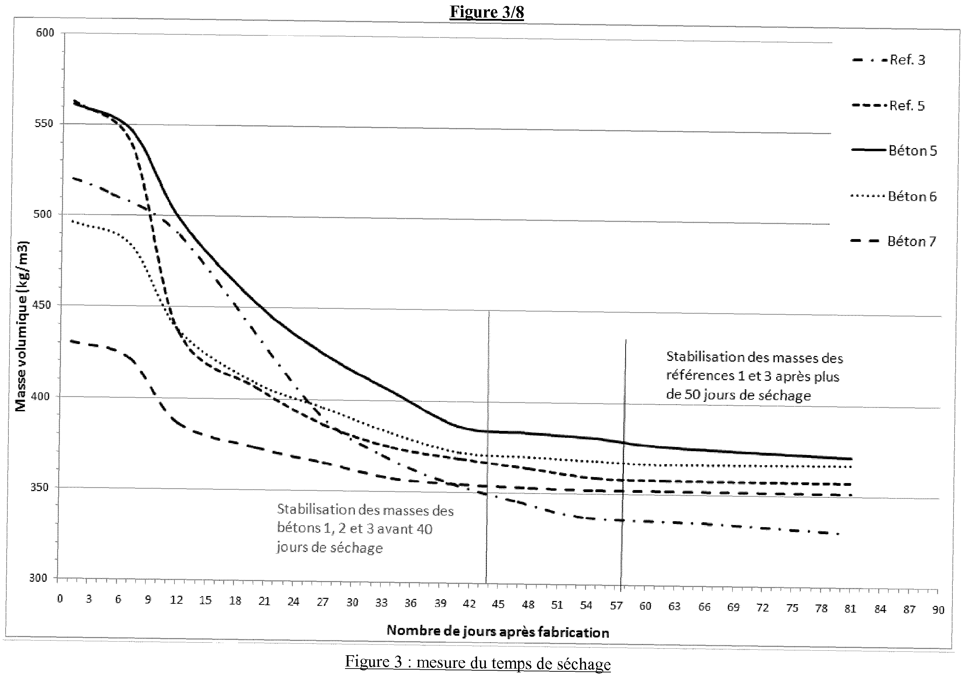

Les résultats sont rapportés en Figure 3.

La figure 3 met en évidence que les bétons à base de granulat végétal contenant un rétenteur d'eau ont une masse volumique qui se stabilise plus rapidement (environ 30 à 40 jours) qu'un béton à base de granulats végétaux ne contenant pas de rétenteur d'eau (plus de 50 jours).

Les bétons de l'invention permettent donc de réduire significativement le temps de séchage.

### Exemple 12 - Résistance en compression des bétons de l'invention

Les résistances en compression à 90 jours des bétons 1 à 4 sont évaluées selon les *Règles de Construire en Chanvre* à savoir une presse conforme à la norme EN 12390-4, équipée d'un capteur de force de 50 kN avec une vitesse de déplacement de 5mm/min et 3 cycles de charges et décharges en comparaison avec des bétons Réf.1 et Ref.2 dont la composition est rapportée précédemment.

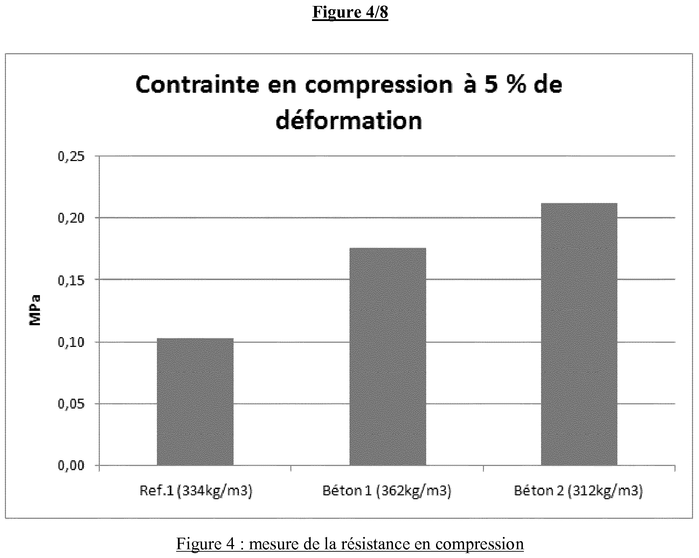

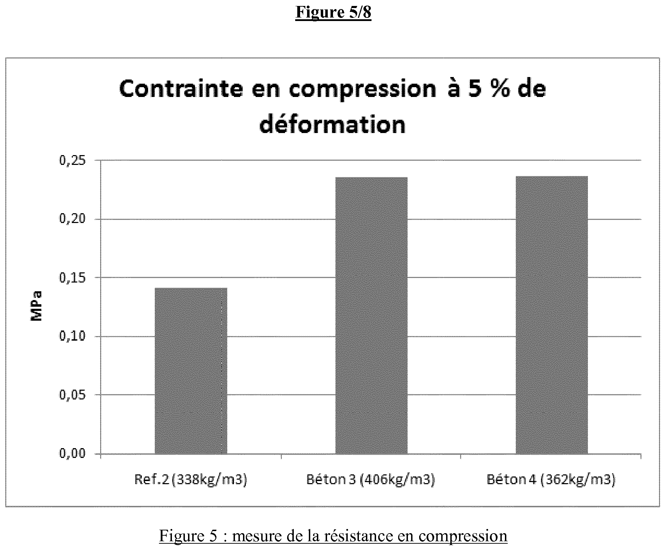

Les résultats sont rapportés en Figures 4 et 5.

La figure 4 et 5 mettent en évidence que les bétons à base de granulat végétal contenant un rétenteur d'eau présentent des contraintes en compression à 5% de déformation significativement plus élevées que les bétons à base de granulat végétal ne contenant pas de rétenteur d'eau.

### Exemple 13 - Résistance en compression des bétons de l'invention

Les résistances en compression à 90 jours des bétons 5 à 8 sont évaluées selon les *Règles de Construire en Chanvre* à savoir une presse conforme à la norme EN 12390-4, équipée d'un capteur de force de 50 kN avec une vitesse de déplacement de 5mm/min et 3 cycles de charges et décharges en comparaison avec des bétons Ref.3 à Ref.5 dont la composition est rapportée précédemment.

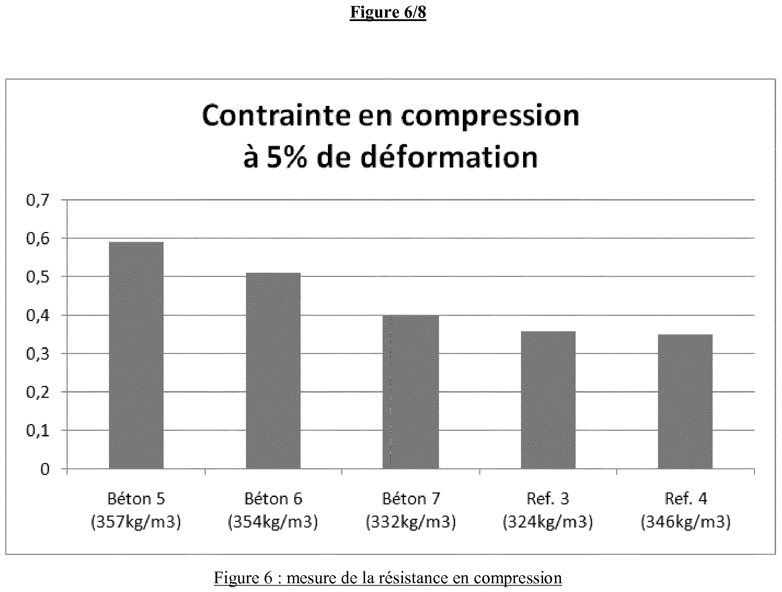

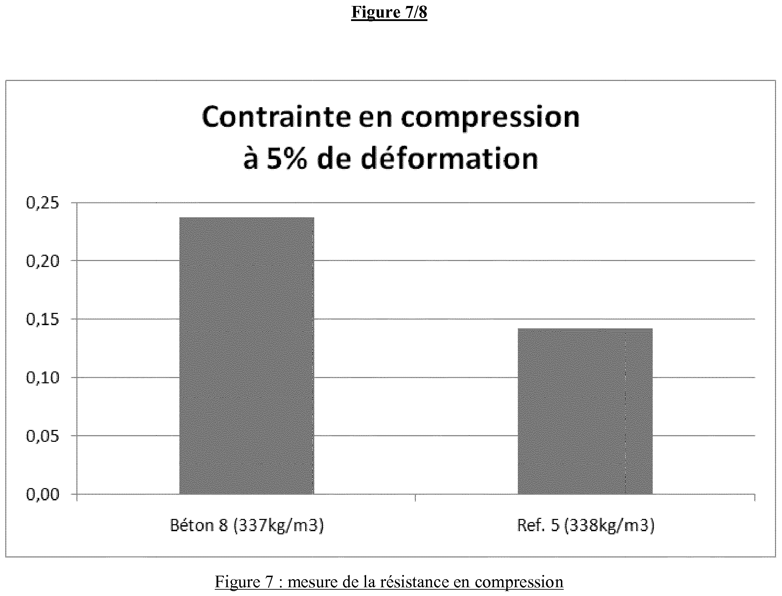

Les résultats sont rapportés en Figures 6 et 7.

Les figures 6 et 7 mettent en évidence que les bétons à base de granulat végétal contenant un rétenteur d'eau présentent des contraintes en compression à 5% de déformation significativement plus élevées que les bétons à base de granulat végétal ne contenant pas de rétenteur d'eau.

### Exemple 14 - Résistance face au développement de micro-organismes des bétons de l'invention

La résistance des bétons face au développement de micro-organismes est évaluée par quantification de la flore microbiologique, également appelée flore totale. La flore totale regroupe les levures, moisissures et bactéries.

La flore fongique regroupe quant à elle les levures et moisissures.

La quantification de la flore totale et fongique a été déterminée dans les bétons de l'invention 90 jours après leur fabrication selon la méthodologie suivante.

L'échantillon de béton de chanvre est prélevé au cœur ou en surface d'une éprouvette de béton de chanvre. L'échantillon est ensuite broyé, dilué puis ensemencé deux milieux :
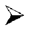 le milieu PCA, milieu nutritif particulièrement favorable à la croissance et au dénombrement de la plupart des micro-organismes ; ce milieu convient donc pour quantifier la flore totale c'est à dire les levures et moisissures et les bactéries.
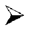 le milieu MEAc, milieu nutritif particulièrement favorable à la croissance et au dénombrement de moisissures, qui permet de dénombrer les levures et moisissures.

Puis le dénombrement est effectué par comptage d'unité formant colonie (UFC).

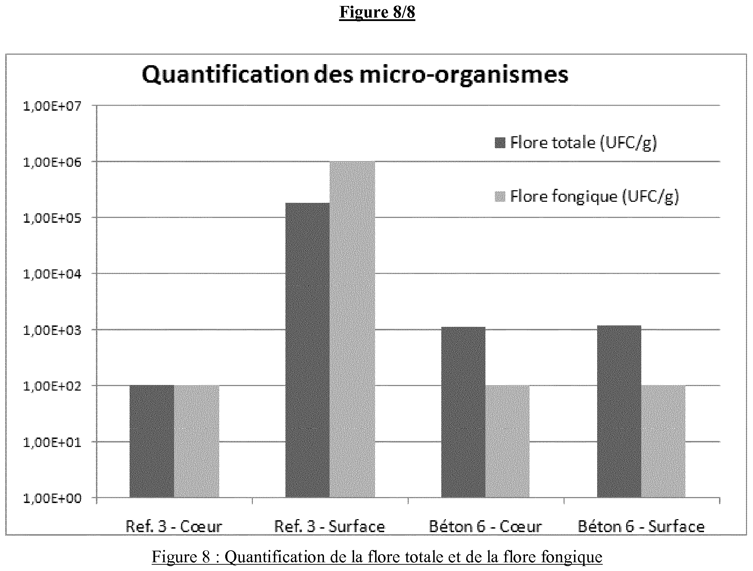

Les résultats sont rapportés en Figure 8.

La présence dans un échantillon de flore microbiologique en quantité inférieure à 1.10³ UFC/g (Unité formant colonie par gramme) correspond à une flore « normale ».

La présence dans un échantillon de flore microbiologique d'une quantité supérieure ou égale à 1.10⁴ est critique et représente un risque de dégradation de l'interface végétal/minéral.

Ainsi, il apparait que le béton de l'invention ne présente pas de développement de micro-organismes quelque soit le prélèvement (cœur ou surface) contrairement au béton de référence qui contient une quantité élevée de flore fongique et totale à la surface.

## Revendications

1. Matériau de construction comprenant :
- de 10% à 60% (p/p) d'un liant hydraulique et/ou d'un liant aérien ;
- de 17% à 50% (p/p) d'un granulat végétal choisi parmi le coton, la fibre de chanvre, la chènevotte, les anas de lin, les copeaux de bois, les billes de lièges, le miscanthus, le sisal et/ou la noix de coco ;
- de 0,05% à 5% (p/p) d'un agent rétenteur d'eau ; et
- de 10% à 50% (p/p) d'eau.

2. Matériau de construction selon la revendication 1, **caractérisé en ce que** le liant est choisi comme étant de la chaux hydraulique, un ciment Portland artificiel, un ciment naturel prompt et/ou de la chaux aérienne.

3. Matériau de construction selon la revendication 2, **caractérisé en ce que** le liant est un ciment naturel prompt.

4. Matériau de construction selon la revendication 3, **caractérisé en ce que** le ciment naturel prompt est constitué d'un clinker contenant :
- de 0% à 35% (p/p) de C₃S ;
- de 10% à 60% (p/p) de C₂S ;
- de 1% à 12% (p/p) de C₄AF ;
- de 1% à 10% (p/p) de C₃A ;
- de 5% à 50% (p/p) de CaCO₃ (calcite) ;
- de 10% à 15% (p/p) de Ca₅(SiO₄)₂CO₃ (spurrite) ;
- de 3 à 10% (p/p) de phases sulfates : yee'limite (C₄A₃$), Langbeinite (K₂Mg₂(SO₄)₃, anhydrite (C$) ; et
- de 10 à 20% (p/p) de chaux, de périclase, de quartz et/ou d'une ou plusieurs phases amorphes.

5. Matériau de construction selon l'une des revendications 1 à 4, **caractérisé en ce qu'**il contient de 15% à 45% (p/p) de liant.

6. Matériau de construction selon l'une des revendications 1 à 5, **caractérisé en ce que** l'agent rétenteur d'eau est choisi parmi la gomme de guar, l'alginate de calcium, l'alginate de sodium, le carboxyméthylcellulose, la méthylhydroxylethylcellulose, l'éthylhydroxyéthycellulose et le poly(acide acrylique).

7. Matériau de construction selon l'une des revendications 1 à 6, **caractérisé en ce qu'**il comprend de 0,05% à 3% (p/p) d'agent rétenteur d'eau.

8. Matériau de construction selon l'une des revendications 1 à 7, **caractérisé en ce qu'**il comprend de 15% à 45% (p/p) d'eau.

9. Matériau de construction selon l'une des revendications 1 à 8, **caractérisé en ce qu'**il comprend également un ou plusieurs des constituants suivants :
- jusqu'à 4% (p/p) d'un accélérateur de durcissement tel que le carbonate de sodium l'hydrogénocarbonate de sodium, le carbonate de lithium et l'aluminate de sodium ;
- jusqu'à 1% (p/p) d'un agent retardateur choisi parmi l'acide citrique, le citrate trisodique, le citrate potassique l'acide tartrique et le tartrate de potassium.

10. Matériau de construction selon l'une des revendications 1 à 9, **caractérisé en ce que** ledit matériau est un béton.

11. Matériau de construction selon l'une des revendications 1 à 9, **caractérisé en ce que** ledit matériau est un mortier.

12. Utilisation d'un matériau de construction selon l'une des revendications 1 à 11 pour la réalisation ou la rénovation d'un mur, d'une cloison, d'un dallage ou du toit d'un bâtiment.

13. Kit utile pour la préparation d'un matériau de construction selon l'une des revendications 1 à 11, ledit kit comprenant :
- une composition contenant :
• un liant hydraulique et/ou d'un liant aérien ;
• et un agent rétenteur d'eau ;
- et un granulat végétal tel que défini dans la revendication 1.

## Patentansprüche

1. Baumaterial, umfassend:
- 10 % bis 60 % (w/w) eines hydraulischen Bindemittels und/oder eines Luftbindemittels;
- 17% bis 50 % (w/w) eines pflanzlichen Granulats, ausgewählt aus Baumwolle, Hanffaser, Hanfholz, Flachsschäben, Holzspänen, Korkkugeln, Miscanthus, Sisal und/oder Kokosnuss;
- 0,05 % bis 5 % (w/w) eines Wasserretentionsmittels; und
- 10 % bis 50 % (w/w) Wasser.

2. Baumaterial nach Anspruch 1, **dadurch gekennzeichnet, dass** das Bindemittel so ausgewählt ist, dass es hydraulischer Kalk, ein künstlicher Portlandzement, natürlicher Schnellzement und/oder Luftkalk ist.

3. Baumaterial nach Anspruch 2, **dadurch gekennzeichnet, dass** das Bindemittel ein natürlicher Schnellzement ist.

4. Baumaterial nach Anspruch 3, **dadurch gekennzeichnet, dass** der natürliche Schnellzement aus einem Klinker besteht, welcher enthält:
- 0 % bis 35 % (w/w) C₃S;
- 10 % bis 60 % (w/w) C₂S;
- 1 % bis 12 % (w/w) C₄AF;
- 1 % bis 10 % (w/w) C₃A;
- 5 % bis 50 % (w/w) CaCO₃ (Calcit);
- 10 % bis 15 % (w/w) Ca₅(SiO₄)₂CO₃ (Spurrit);
- 3 bis 10% (w/w) Sulfatphasen: Ye'elimit (C₄A₃$); Langbeinit (K₂Mg₂(SO₄)₃, Anhydrit (C$); und
- 10 bis 20 % (w/w) Kalk, Periklas, Quarz und/oder einer oder mehrerer amorpher Phasen.

5. Baumaterial nach einem der Ansprüche 1 bis 4, **dadurch gekennzeichnet, dass** es 15 % bis 45 % (w/w) Bindemittel enthält.

6. Baumaterial nach einem der Ansprüche 1 bis 5, **dadurch gekennzeichnet, dass** das Wasserretentionsmittel ausgewählt ist aus Guargummi, Calciumalginat, Natriumalginat, Carboxymethylcellulose, Methylhydroxylethylcellulose, Ethylhydroxyethylcellulose und Poly(acrylsäure).

7. Baumaterial nach einem der Ansprüche 1 bis 6, **dadurch gekennzeichnet, dass** es 0,05 % bis 3 % (w/w) Wasserretentionsmittel umfasst.

8. Baumaterial nach einem der Ansprüche 1 bis 7, **dadurch gekennzeichnet, dass** es 15 % bis 45 % (w/w) Wasser umfasst.

9. Baumaterial nach einem der Ansprüche 1 bis 8, **dadurch gekennzeichnet, dass** es ebenfalls einen oder mehrere der folgenden Bestandteile umfasst:
- bis zu 4 % (w/w) eines Abbindebeschleunigers wie etwa Natriumcarbonat, Natriumhydrogencarbonat, Lithiumcarbonat und Natriumaluminat;
- bis zu 1 % (w/w) eines Verzögerungsmittels, ausgewählt aus Zitronensäure, Trinatriumcitrat, Kaliumcitrat, Weinsäure und Kaliumtartrat.

10. Baumaterial nach einem der Ansprüche 1 bis 9, **dadurch gekennzeichnet, dass** das Material ein Beton ist.

11. Baumaterial nach einem der Ansprüche 1 bis 9, **dadurch gekennzeichnet, dass** das Material ein Mörtel ist.

12. Verwendung eines Baumaterials nach einem der Ansprüche 1 bis 11 für den Bau oder die Sanierung einer Mauer, einer Trennwand, einer Pflasterung oder des Dachs eines Gebäudes.

13. Set, das für die Herstellung eines Baumaterials nach einem der Ansprüche 1 bis 11 geeignet ist, wobei das Set umfasst:
- eine Zusammensetzung, welche enthält:
-- ein hydraulisches Bindemittel und/oder ein Luftbindemittel;
-- und ein Wasserretentionsmittel;
- und ein pflanzliches Granulat wie in Anspruch 1 definiert.

## Claims

1. A building material comprising:
- from 10% to 60% (w/w) of a hydraulic binder and/or an air binder;
- from 17% to 50% (w/w) of a plant aggregate selected from cotton, hemp fiber, hemp chaff, flax shives, wood chips, cork balls, miscanthus, sisal and/or coconut;
- from 0.05% to 5% (w/w) of a water-retaining agent; and
- from 10% to 50% (w/w) of water.

2. The building material according to claim 1, **characterized in that** the binder is selected from a hydraulic lime, an artificial Portland cement, a prompt natural cement and/or air lime.

3. The building material according to claim 2, **characterized in that** the binder is a prompt natural cement.

4. The building material according to claim 3, **characterized in that** the prompt natural cement is constituted by a clinker containing:
- from 0% to 35% (w/w) of C₃S;
- from 10% to 60% (w/w) of C₂S;
- from 1% to 12% (w/w) of C₄AF;
- from 1% to 10% (w/w) of C₃A;
- from 5% to 50% (w/w) of CaCO₃ (calcite);
- from 10% to 15% (w/w) of Ca₅(SiO₄)₂CO₃ (spurrite);
- from 3 to 10% (w/w) of sulfates phases: yee'limite (C₄A₃$), Langbeinite (K₂Mg₂(SO₄)₃, anhydrite (C$); and
- from 10 to 20% (w/w) of lime, periclase, quartz and/or one or several amorphous phase(s).

5. The building material according to any of claims 1 to 4, **characterized in that** it contains from 15% to 45% (w/w) of binder.

6. The building material according to any of claims 1 to 5, **characterized in that** the water-retaining agent is selected from guar gum, calcium alginate, sodium alginate, carboxymethyl cellulose, methyl hydroxyethyl cellulose, ethyl hydroxyethyl cellulose and polyacrylic acid.

7. The building material according to any of claims 1 to 6, **characterized in that** it comprises from 0.05% to 3% (w/w) of water-retaining agent.

8. The building material according to any of claims 1 to 7, **characterized in that** it comprises from 15% to 45% (w/w) of water.

9. The building material according to any of claims 1 to 8, **characterized in that** it also comprises one or more of the following constituents:
- up to 4% (w/w) of a hardening accelerator such as sodium carbonate, sodium hydrogen carbonate, lithium carbonate and sodium aluminate;
- up to 1% (w/w) of a retarding agent selected from citric acid, trisodium citrate, potassium citrate, tartaric acid and potassium tartrate.

10. The building material according to any of claims 1 to 9, **characterized in that** said material is a concrete.

11. The building material according to any of claims 1 to 9, **characterized in that** said material is a mortar.

12. A use of a building material according to any of claims 1 to 11 for building or renovating a wall, a partition, a paving or the roof of a building.

13. A kit useful for preparing a building material according to any of claims 1 to 11, said kit comprising:
- a composition containing:
▪ a hydraulic binder and/or an air binder;
▪ and a water-retaining agent;
- and a plant aggregate as defined in claim 1.
